# DEMANDE DE BREVET EUROPEEN

(11) **EP 2 315 192 A1**
(43) Date de publication de la demande: **27.04.2011**
(21) Numéro de dépôt: 10188384.1
(22) Date de dépôt: 21.10.2010
(51) Int. Cl.: G08G 1/14, B62H 3/00, E04H 6/00, E04H 6/42, G07F 7/08

(54) **Procédé de gestion d'un système de stationnement d'un véhicule**

(30) Priorité: 22.10.2009 FR 0957417
(71) Demandeur: Clear Channel France, 92100 Boulogne Billancourt (FR)
(72) Inventeur: Callegari, Robin, 75003, PARIS (FR); Doucet, Franck, 92600, ASNIERES (FR); Wehrli, Laurent, 78460, CHEVREUSE (FR); Mulet, Ronan, 35136, ST JACQUES DE LA LANDE (FR); Cesbron, Frédéric, 44300, NANTES (FR); Joron, Nicolas, 92150, SURESNES (FR)
(74) Mandataire: Collin, Jérôme

(57) **Abrégé**

L'invention concerne un procédé de gestion d'un réseau de systèmes automatiques de stationnement (1) d'un véhicule comprenant :
- une aire (10) de stationnement comportant un nombre défini de places de stationnement ;
- des moyens d'identification (20) d'un utilisateur ;
- une unité de commande (50) comportant des moyens d'assignation d'une place de stationnement (12) libre à l'utilisateur ; et
- des moyens de verrouillage (11) du véhicule sur la place de stationnement assignée par l'unité de commande (50),
ledit procédé comprenant les étapes suivantes :
- identifier un utilisateur ;
- déterminer si une place de stationnement est déjà assignée à l'utilisateur dans le réseau ; et
- actionner les moyens de verrouillage (11) du véhicule.

## Description

L'invention concerne les systèmes automatiques de stationnement de véhicules, ainsi que les procédés de gestion du stationnement associés.

Plus particulièrement, l'invention concerne les systèmes automatiques de stationnement de vélos dans des garages sécurisés accessibles au public.

De tels systèmes mettent à disposition d'utilisateurs des espaces sécurisés leur permettant de stocker temporairement des véhicules.

En effet, la plupart des particuliers se déplaçant grâce à des moyens personnels de locomotion (du type voiture, moto, vélo, etc.) rencontrent des problèmes de stationnement (notamment en agglomérations), et sont souvent confrontés à la crainte de se faire voler ou vandaliser leur véhicule.

Il est donc devenu nécessaire de mettre à disposition des aires de stationnement sécurisées permettant aux particuliers de garer leur véhicule, que ce soit à côté de leur lieu de résidence, près de leur lieu de travail, ou encore au niveau de zones de forte fréquentation du type gares, écoles, etc.

On connaît par exemple des systèmes permettant à un utilisateur d'accéder à une aire de stationnement moyennant son identification à l'entrée.

Ce type de système a notamment pour avantage de proposer un stationnement sécurisé de son véhicule à l'utilisateur.

Néanmoins, le remplissage de l'aire de stationnement n'est pas optimal et encourage par exemple l'apparition de véhicules dits « véhicules ventouses » qui bloquent la rotation de stationnement de l'aire. Par ailleurs, ce système ne permet pas de limiter automatiquement le stationnement à un seul véhicule à la fois par utilisateur.

D'autres systèmes de stationnement ont été proposés, permettant de résoudre en partie les problèmes rencontrés par ces systèmes de stationnement.

La demande de brevet FR 2 926 910 propose par exemple une aire de stationnement comportant un nombre déterminé de places de stationnement, un moyen d'identification et une entrée sécurisée. Le véhicule, de préférence un vélo, est muni d'un transpondeur (ou « tag », en anglais) RFID (pour Radio Frequency lDentification, c'est-à-dire radio-identification). Le tag comporte une information associée à l'utilisateur, et une information associée au véhicule. Il peut être lu par des moyens de lecture de tag disposés notamment à l'entrée l'aire de stationnement, permettant d'identifier l'utilisateur ainsi que son vélo et, le cas échéant, de leur autoriser l'accès à l'aire de stationnement.

Néanmoins, en cas de perte ou de dégradation du tag, l'utilisateur ne peut plus accéder aux aires de stationnement.

Par ailleurs, ce système ne permet pas à l'utilisateur de stationner différents véhicules avec un même abonnement : le système étant fondé sur l'association d'un utilisateur avec un véhicule donné, l'utilisateur est limité au stationnement de ce véhicule donné uniquement. Il lui faut donc souscrire à plusieurs abonnements s'il souhaite utiliser le système avec plusieurs vélos différents, simultanément ou séparément.

En outre, les moyens d'identification du tag appliqué sur le vélo sont complexes, et ce système requière notamment la mise en place d'un sas d'accès contraignant.

Enfin, ces systèmes ne garantissent pas la sécurité des vélos stationnés dans l'aire contre les utilisateurs qui ont été autorisés à pénétrer dans l'aire.

L'invention vise donc à améliorer la sécurisation des systèmes automatiques de stationnement de véhicules, ainsi qu'à proposer un système et un procédé qui soient plus simples à mettre en oeuvre et autorisent un particulier à garer, le cas échéant, tout véhicule avec un même abonnement.

Pour cela, l'invention propose un procédé de gestion d'un réseau de systèmes automatiques de stationnement d'un véhicule comprenant :
- une aire de stationnement comportant un nombre défini de places de stationnement ;
- des moyens d'identification d'un utilisateur ;
- une unité de commande comportant des moyens d'assignation d'une place de stationnement libre à l'utilisateur ; et
- des moyens de verrouillage du véhicule sur la place de stationnement assignée par l'unité de commande,
ledit procédé comprenant les étapes suivantes :
- identifier un utilisateur;
- déterminer si une place de stationnement est déjà assignée à l'utilisateur dans le réseau ; et
- actionner les moyens de verrouillage du véhicule.

Certains aspects préférés mais non limitatifs du procédé de gestion selon l'invention sont les suivants :
- l'unité de commande n'actionne que les moyens de verrouillage associés à la place assignée à l'utilisateur ;
- lorsqu'une place de stationnement est déjà assignée à l'utilisateur, l'unité de commande déverrouille automatiquement les moyens de verrouillage de la place de stationnement qui est assignée à l'utilisateur ;
- l'unité de commande ne déverrouille que les moyens de verrouillage de la place de stationnement qui est assignée à l'utilisateur ; et
- lorsqu'aucune place de stationnement n'est encore assignée à l'utilisateur, l'unité de commande assigne une place de stationnement à l'utilisateur et autorise le verrouillage des moyens de verrouillage de cette place de stationnement.

Selon un deuxième aspect, l'invention propose une borne de stationnement d'un véhicule du type vélo, notamment pour une aire de stationnement comportant une pluralité de places de stationnement, ladite borne comprenant des moyens de verrouillage du véhicule et étant contrôlée par une unité commande, et les moyens de verrouillage étant actionnables par l'unité de commande.

Certains aspects préférés mais non limitatifs de la borne selon l'invention sont les suivants :
- les moyens de verrouillage sont un câble antivol, dont une extrémité est fixée sur la borne ;
- l'autre extrémité du câble est pourvue d'un embout complémentaire d'un logement prévu sur la borne ; et
- la borne fait partie d'un système automatique de stationnement géré par un procédé selon l'invention.

D'autres caractéristiques, buts et avantages apparaîtront mieux à la lecture de la description détaillée qui va suivre, et en regard des dessins annexés donnés à titre d'exemples non limitatifs et sur lesquels :
La figure 1 est une vue d'une aire de stationnement selon l'invention ;
La figure 2 est une vue représentant quatre places de stationnement, dont deux sont utilisées par des vélos ;

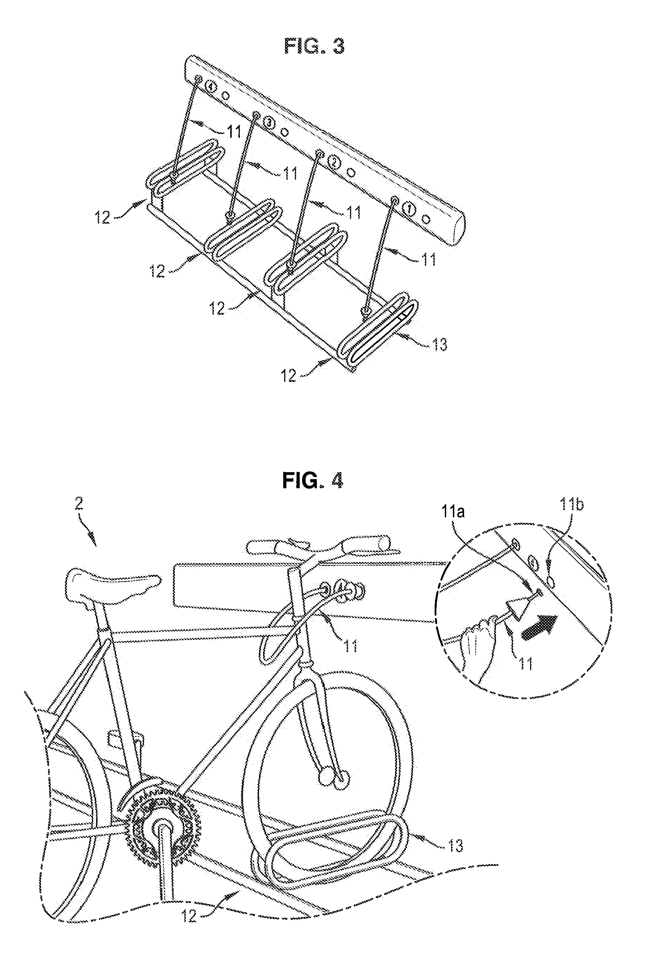

La figure 3 est une vue représentant les places de stationnement de la figure 2, vides ;
La figure 4 est une vue représentant le verrouillage d'un mode de réalisation des moyens d'accrochage selon l'invention;

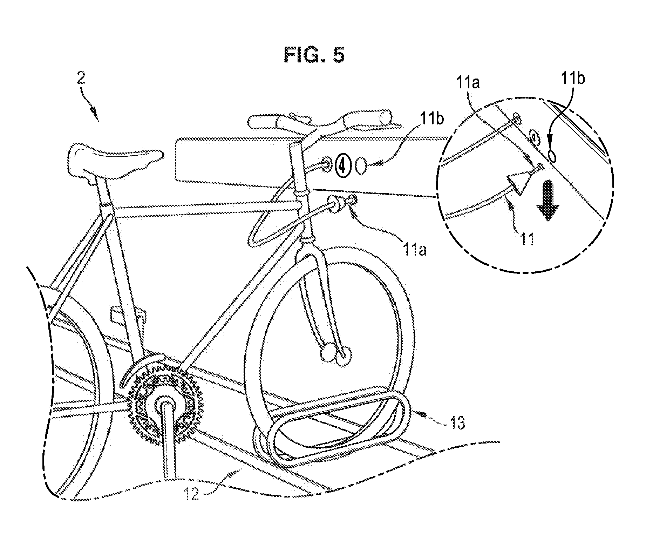

La figure 5 est une vue représentant le déverrouillage du mode de réalisation des moyens d'accrochage de la figure 4 ;

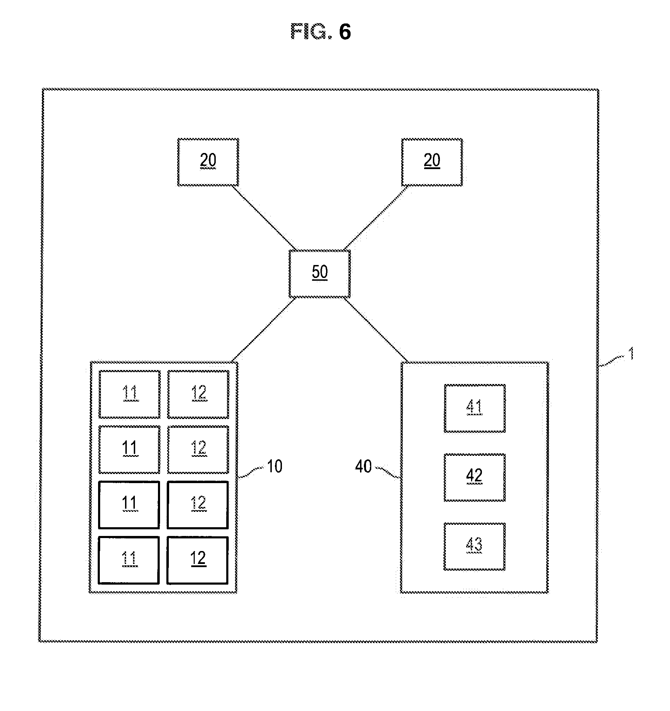

La figure 6 est un schéma illustrant un système automatique de stationnement selon l'invention ;

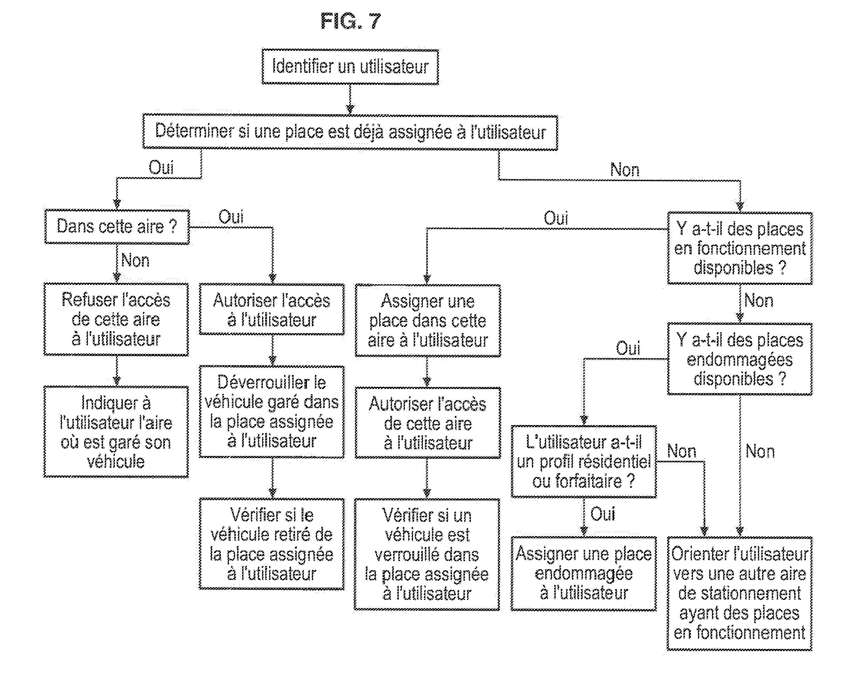

La figure 7 est un graphe représentant des étapes d'un mode du procédé de l'invention ; et
La figure 8 est un schéma illustrant la gestion d'un système de stationnement selon l'invention

### Système de stationnement

Nous allons à présent décrire un système 1 automatique de stationnement d'un véhicule 2 conforme à l'invention.

Un tel système 1 comprend notamment :
- une aire 10 de stationnement comportant un nombre défini de places de stationnement ;
- des moyens d'identification 20 d'un utilisateur, par exemple un dispositif de lecture d'une carte magnétique, un pavé numérique, ou encore un dispositif de lecture d'une puce RFID ;
- un système servant d'interface avec l'utilisateur, par exemple un écran 30 ;
- une entrée sécurisée 40 de l'aire 10 de stationnement ; et
- une unité de commande 50 de l'aire 10 de stationnement.

De préférence, l'aire 10 de stationnement est une enceinte fermée, par exemple un abri fermé auquel l'utilisateur ne peut accéder que par l'entrée sécurisée.

Cette entrée sécurisée 40 comporte notamment une porte sécurisée 41, par exemple une porte anti-panique, comportant des moyens de verrouillage 42 commandés par l'unité de commande 50, et au moins un moyen d'alimentation de secours permettant un fonctionnement normal du système 1 lors de coupures de courant durant une durée limitée, par exemple environ trois heures.

Ces moyens de verrouillage 42 sont par exemple des moyens de verrouillage électromécaniques ou électromagnétiques.

Les moyens de verrouillage 42 électromécaniques peuvent être actionnés soit électriquement par l'unité de commande 50, soit mécaniquement par un utilisateur.

Par exemple, les moyens de verrouillage 42 sont adaptés pour être déverrouillés électriquement depuis l'extérieur de l'aire 10 de stationnement par l'unité de commande 50, et mécaniquement depuis l'intérieur de l'aire 10 (typiquement, un système d'ouverture de porte anti-panique).

Optionnellement, l'entrée sécurisée 40 comporte en outre une unité de contrôle 43 reliée aux moyens de verrouillage 42 et adaptée pour détecter l'ouverture/fermeture de la porte 41, de manière à transmettre à l'unité de commande 50 des informations sur l'état ouvert/fermé de la porte.

Si, l'unité de contrôle 43 signale à l'unité de commande 50 la porte 41 n'a pas été ouverte durant le cycle de déverrouillage, l'unité de commande 50 déduit alors que l'utilisateur n'a pas pu accéder à l'aire 10 dans les temps impartis et renvoie une commande de déverrouillage aux moyens de déverrouillage 42.

Si l'unité de contrôle 43 signale à nouveau que la porte 41 n'a pas été ouverte pendant le deuxième cycle de déverrouillage, l'unité de commande considère alors que l'utilisateur ne souhaite plus entrer dans l'aire 10 de stationnement. L'utilisateur doit alors s'identifier à nouveau afin de pouvoir pénétrer dans l'aire 10 de stationnement.

Par ailleurs, lorsque l'utilisateur déverrouille mécaniquement la porte 41 sécurisée depuis l'intérieur de l'aire 10 de stationnement, par exemple en actionnant la poignée d'une porte anti-panique, l'unité de contrôle 43 envoie un signal à l'unité de commande 50 afin de lui indiquer que la porte 41 a été ouverte. L'unité de commande 50 en déduit donc que l'utilisateur est sorti de l'aire 10 de stationnement.

Avantageusement, l'unité de contrôle 43 envoie le signal sur l'état verrouillé/déverrouillé de la porte 41 sur requête de l'unité de commande 50.

Dans le cas d'une coupure de courant d'une durée supérieure à la durée de vie des moyens d'alimentation de secours, la mise en oeuvre de moyens de verrouillage électromécaniques garantit la sécurisation des véhicules (2) au sein de l'aire 10 de stationnement malgré la coupure de courant.

En effet, le déverrouillage depuis l'extérieur de l'entrée sécurisée 40 (et donc l'ouverture de la porte 41) n'étant possible que sur commande électrique de l'unité commande 50, personne ne peut pénétrer par la porte sécurisée 41 durant la coupure.

L'ouverture mécanique depuis l'intérieur de l'aire 10 de stationnement reste en revanche possible, empêchant ainsi d'y enfermer un utilisateur.

Dans le cas où les moyens de verrouillage 42 sont électromagnétiques, le déverrouillage de l'entrée sécurisée 40 se fait sur commande de l'unité de commande 50 en coupant leur alimentation électrique.

En revanche, depuis l'intérieur de l'aire 10, le déverrouillage de la porte a lieu sans intervention de l'unité de commande 50, par exemple en coupant l'alimentation des moyens de verrouillage 42 lors de l'actionnement mécanique de la poignée de la porte 41.

Bien entendu, l'aire 10 de stationnement peut comporter plusieurs entrées sécurisées 40. Par ailleurs, l'entrée et la sortie peuvent être dissociées, i.e. une porte 41 peut n'être dédiée qu'à l'entrée ou à la sortie du véhicule 2.

Le système 1 automatique de stationnement comporte en outre des moyens de détection individuels de présence 11 d'un véhicule 2 sur une place de stationnement.

Ces moyens de détection individuels 11 permettent au système de déterminer, directement ou indirectement, qu'un véhicule 2 est stationné dans un emplacement d'une aire de stationnement.

Dans la suite de la description, nous allons décrire l'invention en référence à un exemple de réalisation préféré, à savoir celui d'une aire 10 de stationnement prévue pour sécuriser des vélos 2.

Toutefois, cet exemple n'est pas limitatif, et n'est donné qu'à titre d'illustration.

De préférence, l'aire 10 de stationnement appartient à un réseau comportant au moins deux aires de stationnement, et comporte des moyens permettant à leur système 1 de stationnement respectif de communiquer.

Une aire 10 de stationnement sécurisée pour vélo 2 comporte un nombre défini de places de stationnement, chacune étant pourvue d'une borne d'accueil 12 adaptée pour recevoir un vélo 2.

La place comporte en outre des moyens de maintien 13 du vélo 2, par exemple des arceaux adaptés pour maintenir en position la roue avant du vélo 2, ainsi qu'une borne 12 reliée électriquement à l'unité de contrôle.

### Moyens de détection individuels de présence

La borne 12 comporte en outre des moyens de détection individuels de présence 11 d'un vélo 2 sur la place de stationnement qui lui est associée.

Ces moyens de détection individuels de présence 11 peuvent être des moyens de détection directe, c'est-à-dire détectant directement la présence ou l'absence du vélo 2 sur la place de stationnement, ou indirecte, c'est-à-dire permettant de déduire d'une information donnée la présence du vélo 2.

Par exemple, la borne 12 peut être munie de moyens d'accrochage 11 d'un vélo 2 adaptés pour détecter la présence du vélo 2.

Par exemple, les moyens d'accrochage 11 peuvent être un câble antivol dont l'une des extrémités est fixée à la borne 12, l'autre extrémité 11a étant libre et adaptée pour être introduite dans un logement 11b complémentaire prévu dans la borne 12.

De préférence, l'extrémité libre du câble est pourvue d'un embout métallique destiné à coopérer, avec ou sans contact, prévus dans le logement 11b de la borne 12, avec un détecteur de métal (ou un simple contact) et un moyen de retenue contrôlé de manière connue par l'unité de commande.

De la sorte, lorsque l'utilisateur pose son vélo 2 sur la place de stationnement qui lui a été assignée par l'unité de commande 50, il insère par exemple la roue avant du vélo 2 dans les arceaux 13 de la place, et entoure la roue au moyen du câble antivol avant d'introduire l'extrémité libre 11a du câble dans le logement 11b prévu sur la borne 12. La détection de l'extrémité du câble dans le logement est alors transmise à l'unité de commande, qui actionne alors le moyen de retenue de l'embout et en déduit que le vélo 2 a bien été posé sur la place de stationnement qui lui était assignée.

Dans ce mode de réalisation, la détection de la présence du vélo 2 sur la place de stationnement est réalisée indirectement par détection du verrouillage du câble antivol 11 sur la borne 12, et implique l'intervention de l'utilisateur.

Selon une forme de réalisation, deux antivols adjacents sont de couleur différente, de manière à réduire les risques que l'utilisateur verrouille son vélo 2 avec l'antivol d'une place adjacente plutôt qu'avec l'antivol associé à la place qui lui a été assignée.

En variante, ce ne sont pas les moyens d'accrochage prévus sur la borne qui servent de détecteur de présence, mais un capteur automatique de présence, un bouton prévu sur la borne 12 ou à proximité de la place de stationnement, actionnable par l'utilisateur et relié à l'unité de commande, etc.

Ainsi, quelle que soit la forme de la borne 12, chaque place de stationnement est équipée de moyens de détection (directe ou indirecte) individuels 11 permettant de signaler à l'unité de commande 50 que l'utilisateur a bien stationné son vélo 2 dans la place qu'elle lui a assignée.

Dans le cas où la présence du vélo 2 dans la place de stationnement n'est pas détectée, par exemple parce que l'utilisateur n'utilise pas le câble antivol 11, l'unité de commande ne peut alors pas déterminer si le vélo 2 a effectivement été stationné sur la place qui lui a été assignée.

Dans ce cas, au terme d'une durée prédéterminée, le système 1 considère que l'action est annulée, et l'unité de commande 30 annule l'assignation de la place à l'utilisateur.

Ainsi, si l'utilisateur souhaite tout de même disposer d'une place de stationnement, il doit retourner à l'entrée de l'aire 10 et se réidentifier, afin que l'unité 30 lui assigne une nouvelle place.

Par ailleurs, selon une forme avantageuse de l'invention, le système 1 peut considérer que la place de stationnement est susceptible d'être endommagée si l'assignation de cette place est annulée plus d'un nombre prédéfini de fois d'affilée. Il est alors possible d'envoyer quelqu'un sur place afin qu'il vérifie l'état des moyens de détection 11, de la borne 12, etc. associés à cette place. Il peut alors modifier le statut de la place au niveau du système 1 afin de la faire passer en « place endommagée » s'il n'est pas possible de la réparer immédiatement.

### Procédé de gestion

Nous allons à présent décrire un procédé d'utilisation du système 1 automatique de stationnement conforme à l'invention.

Dans un premier temps, l'utilisateur s'identifie à l'entrée sécurisée 40 de l'aire 10 de stationnement, par exemple en entrant un code d'identification, en glissant (ou présentant) une carte de transport devant un lecteur adapté, etc.

Le système 1 analyse alors l'identifiant de l'utilisateur, et détermine s'il est autorisé à pénétrer dans l'aire 10 de stationnement.

Pour cela, le système 1 vérifie si l'utilisateur a effectivement souscrit à un abonnement lui permettant d'accéder à l'une au moins des aires de stationnement, et si son abonnement est à jour.

Si tel n'est pas le cas, le système 1 en informe l'utilisateur, par exemple en affichant un message adapté sur un écran 30 agencé à l'entrée de l'aire 10.

Si l'utilisateur a effectivement souscrit un abonnement qui est valide, le système 1 détermine si une place est déjà assignée à cet utilisateur dans l'une des aires de stationnement du réseau, i.e. si l'utilisateur a déjà stationné un vélo 2 dans l'une des aires de stationnement.

En effet, par abonnement, un utilisateur ne peut stationner qu'un vélo à la fois dans les aires de stationnement. Toutefois, étant donné que seul l'utilisateur est identifié, il n'est pas nécessaire que ce soit systématiquement le même vélo qui soit stationné.

Dans le cas où l'utilisateur a posé un vélo 2 dans une aire 10 différente que celle auprès de laquelle il s'identifie, le système 1 lui refuse l'accès à l'aire 10 pour garantir la sécurité des vélo 2s qui y sont garés. Le système 1 considère en effet que l'utilisateur n'a aucune raison de pénétrer dans cette aire 10 si son vélo 2 est posé dans une autre. En outre, le système 1 lui signale par un message adapté que son vélo 2 est stationné dans une autre aire 10 de stationnement, et lui indique éventuellement l'aire 10 de stationnement où se situe son vélo 2.

Dans le cas où l'utilisateur a déjà garé un vélo 2 dans l'aire 10 de stationnement où il s'identifie, le système 1 lui autorise l'accès à l'aire 10 et déverrouille les moyens de verrouillage 42 de la porte de l'entrée sécurisée 40.

Avantageusement, l'écran à l'entrée rappelle à l'utilisateur la référence (numéro, lettre, etc.) de la place qui a été assignée et dans laquelle est stationné son vélo 2.

L'utilisateur n'a plus qu'à ouvrir la porte 41 afin de pénétrer dans l'aire 10 de stationnement.

Parallèlement ou successivement au déverrouillage de la porte 41 d'accès, l'unité de commande 50 déverrouille les moyens d'accrochage 11 du vélo de l'utilisateur.

Seuls les moyens d'accrochage 11 associés à la place qui avait été assignée à l'utilisateur sont déverrouillés, garantissant ainsi la sécurité des autres vélos 2 stationnés dans l'aire 10.

Si dans un intervalle de temps prédéfini le vélo 2 n'est pas retiré par l'utilisateur, l'unité de contrôle 50 reverrouille automatiquement les moyens d'accrochage 11 pour des raisons de sécurité du vélo 2. La place de stationnement reste alors assignée à l'utilisateur, qui doit à nouveau s'identifier au niveau de l'unité de commande 50 afin de pouvoir reprendre son vélo 2.

En variante, l'unité de contrôle maintient les moyens d'accrochage 11 déverrouillés, et des-assigne la place de stationnement, quand bien même le vélo 2 n'a pas été retiré, de manière à forcer l'utilisateur à ressortir et à se faire réattribuer une place de stationnement. Cette variante de réalisation peut être mise en oeuvre notamment afin d'empêcher les allées-venues de l'utilisateur s'il ne souhaite pas retirer son vélo 2, et ainsi réduire les risques de vol.

Lorsque l'utilisateur détache son vélo 2 et sort de l'aire 10 de stationnement, le système 1 considère alors qu'il peut assigner sa place à autre utilisateur.

Dans le cas où, au moment de l'identification, aucune place de stationnement dans aucune des aires de stationnement du réseau auquel est connecté le système 1 n'est assignée à l'utilisateur, le système 1 en déduit que celui souhaite garer un vélo 2 dans l'aire 10 de stationnement où il s'identifie. Il lui assigne alors une place libre de stationnement dans l'aire 10, et autorise le déverrouillage des moyens d'accrochage 11 afin que celui-ci puisse sécuriser son vélo 2 sur la borne 12 associée.

### Les moyens d'accrochage du véhicule 2

Comme nous l'avons vu, les moyens d'accrochage 11 du vélo 2 sur la borne 12 ont pour fonction de verrouiller le vélo 2 sur la place assignée à l'utilisateur et sont gérés par l'unité de commande.

De préférence, l'unité de commande 50 n'actionne que les moyens d'accrochage 11 qui sont assignés à un utilisateur qui vient de s'identifier.

Par actionner on entend ici permettre le verrouillage des moyens d'accrochage 11, ou au contraire permettre leur déverrouillage.

Ainsi, lorsque l'unité de commande 50 assigne une place de stationnement à un utilisateur, elle autorise celui-ci à venir accrocher son vélo 2, par exemple sur la borne 12 associée à la place assignée.

Plus précisément, selon une forme de réalisation préférée de l'invention, par actionner on entendra verrouiller ou déverrouiller les moyens d'accrochage 11.

Pour cela, selon le mode de réalisation précédemment décrit, l'unité de commande 50 contrôle le détecteur métallique du logement 11b de la place de stationnement qu'il a assignée à l'utilisateur, et actionne le moyen de retenue prévu dans le logement 11b de manière à verrouiller l'embout métallique 11a dès que celui-ci est détecté dans le logement 11b.

Seuls les moyens d'accrochage 11 associés à la place assignée peuvent être verrouillés.

L'utilisateur ne peut donc pas verrouiller les moyens d'accrochage 11 d'une autre place de stationnement.

De plus, il est incité à stationner son vélo 2 sur la place de stationnement qui lui a été assignée, et peut en outre sécuriser son vélo 2 grâce à des moyens d'accrochage qui lui sont fournis directement par l'aire de stationnement 10 : il n'est donc plus nécessaire qu'il prenne un cadenas personnel.

Par ailleurs, lorsqu'un utilisateur souhaite retirer son vélo 2, l'unité de commande 50 l'autorise à décrocher les moyens d'accrochage 11 associés à la place de stationnement qui lui a été assignée.

Pour cela, et toujours selon le même mode de réalisation, l'unité de commande 50 déverrouille le moyen de retenue de manière à permettre l'utilisateur de retirer l'embout 11a du logement 11b.

Cette opération de verrouillage/déverrouillage peut en outre être confirmée par l'actionnement optionnel par l'utilisateur d'une commande, telle qu'un bouton prévu sur la borne.

Dans tous les cas, seuls les moyens d'accrochage 11 associés à la place assignée peuvent être déverrouillés : le système 1 garantit donc que les vélos 2 qui ont été correctement accrochés par les autres utilisateurs restent verrouillés à leur borne respective, réduisant ainsi les risques de vol des vélos par un utilisateur mal intentionné.

Par ailleurs, un utilisateur ayant stationné son vélo depuis un long moment peut plus facilement le récupérer, étant donné que c'est le seul qui soit déverrouillé par l'unité de commande 50.

Bien entendu, la forme de réalisation développée à titre indicatif des moyens d'accrochage 11 du vélo sur la borne ne sont pas limitatifs.

Par exemple, les moyens d'accrochage 11 peuvent prendre la forme de l'arceau utilisé généralement pour maintenir un vélo 2 en position verticale. L'arceau est alors muni en outre de mâchoires pouvant se refermer, sur contrôle de l'unité de commande, sur la roue avant du vélo 2.

### La gestion des systèmes de stationnement

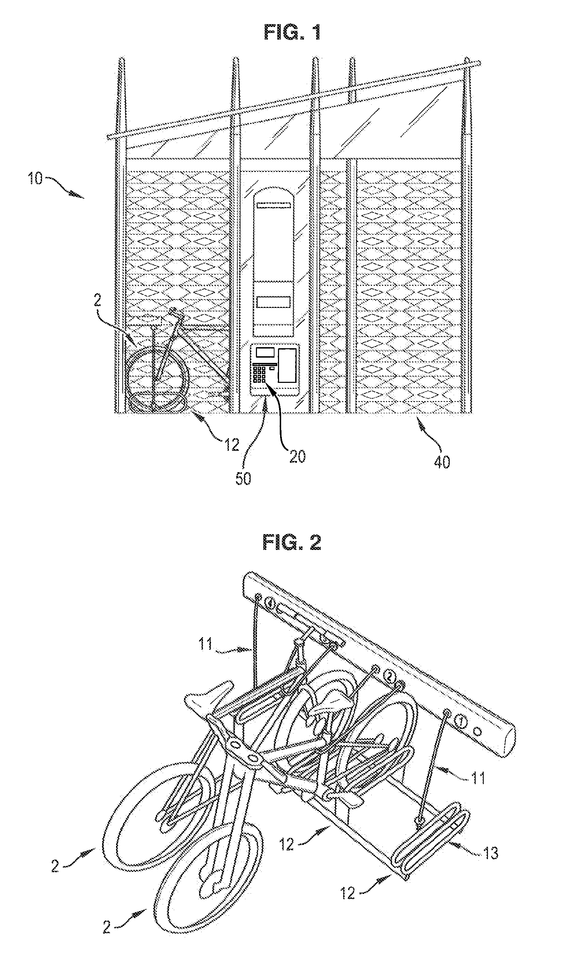

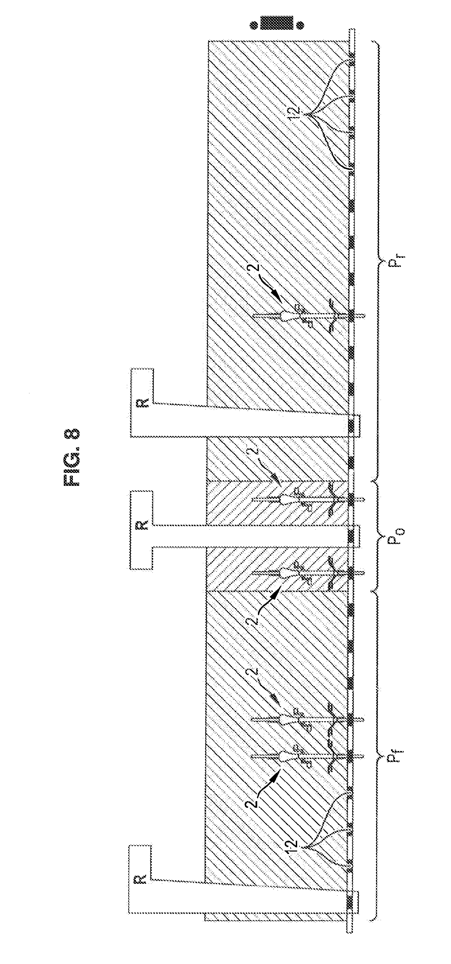

Comme illustré sur les figures 1 et 8 annexées, au cours d'une première étape, optionnelle, le système 1 détermine le profil de l'utilisateur.

Par profil on entend ici le type d'abonnement auquel cotise l'utilisateur, qui répond de préférence aux besoins spécifiques possibles de déplacements des utilisateurs.

Selon un mode de réalisation donné à titre d'exemple, on classe les profils des utilisateurs en trois catégories : les occasionnels Po, les résidentiels Pr et les forfaitaires Pf.

Le profil « occasionnel » Po correspond par exemple à un abonnement, notamment annuel, trimestriel ou mensuel, permettant à un utilisateur d'utiliser à volonté à tout ou partie des aires de stationnement du réseau durant sa période d'abonnement, moyennant un tarif horaire fixé.

Le profil « résidentiel » Pr correspond par exemple à un abonnement, notamment annuel, trimestriel ou mensuel, permettant à un utilisateur de disposer d'un emplacement sécurisé permanent dans une aire 10 de stationnement particulière et identifiée dans le contrat d'abonnement. Lorsque l'utilisateur souhaite garer son vélo 2 dans une autre aire 10 que celle qui est prédéfinie dans son contrat d'abonnement, il paye alors un prix fixe par heure de stationnement dans cette autre aire 10, généralement égal au tarif horaire fixé pour le profil occasionnel.

Le profil « forfaitaire » Pf correspond par exemple à un abonnement, notamment annuel, trimestriel ou mensuel, permettant à un utilisateur de disposer d'un emplacement sécurisé dans une aire 10 de stationnement particulière et identifiée dans le contrat d'abonnement, pendant un nombre d'heures limité par jour et/ou pendant des plages horaires prédéterminée (notamment pendant les heures de travail, etc.). Lorsque l'utilisateur souhaite garer son vélo 2 dans une autre aire 10 que celle qui est prédéfinie dans son contrat d'abonnement, un régime particulier lui est appliqué. Par exemple, il paye un prix fixe par heure de stationnement dans cette autre aire 10, généralement égal au tarif horaire fixé pour le profil occasionnel. Optionnellement, l'utilisateur dispose d'un crédit d'heures supplémentaires gratuites, valable par exemple pendant un mois, lui permettant d'étendre sa durée de stationnement dans l'aire 10 prédéfinie au-delà des heures définies dans son contrat d'abonnement.

Ainsi, grâce aux conditions tarifaires fixées par ces abonnement, le système 1 automatique de stationnement encourage les utilisateurs occasionnels Po et forfaitaires Pf à déplacer leur vélo, limitant ainsi le nombre de « véhicules tampon ».

Cet avantage est d'autant plus marqué grâce à l'association réalisée par l'unité de commande et la place assignée à l'utilisateur. En effet, grâce au procédé et au système 1 selon l'invention, il devient possible de déterminer si un utilisateur, même résidentiel Pr (et donc ayant un accès illimité à une aire 10 particulière) utilise l'aire 10 de stationnement à des fins de stockage pur, ou s'il utilise effectivement son vélo.

De la sorte, il sera possible à un administrateur du système 1 de vérifier le type de fréquentation de l'aire 10 de stationnement, et éventuellement de refuser le renouvellement d'un abonnement d'un utilisateur si celui-ci ne fait que stocker son vélo. En effet, de tels utilisateurs perturbent la gestion des aires de stationnement.

Par ailleurs, la mise en oeuvre des profils d'utilisateur permet de gérer le remplissage et l'occupation des aires de stationnement.

En effet, l'aire de stationnement 10 comporte des zones réservées pour des utilisateurs abonnés correspondant chacune à un nombre paramétrable de places de stationnement :on réserve donc dans chaque aire 10 un nombre paramétrable, de places réservées à chaque type de profil.

Selon une forme de réalisation, ce nombre paramétrable dépend de l'aire de stationnement, des types d'abonnement proposés aux utilisateurs, du nombre d'abonnés par type d'abonnement, etc. et peut être fixe ou variable dans le temps.

Par exemple, 50% des places sont réservées aux forfaitaires Pf, 30% aux résidentiels Pr, et 20% aux occasionnels Po.

Ces pourcentages peuvent bien entendu varier d'une aire 10 à l'autre, notamment en fonction de la localisation de l'aire 10, du nombre d'utilisateurs désignant l'aire 10 comme aire 10 identifiée, de la période de l'année, etc.

Par ailleurs, les places réservées peuvent être volantes, dans le sens où l'aire 10 de stationnement n'est pas nécessairement physiquement divisée en plusieurs zones réservées. Ainsi, une place peut indifféremment être assignée à un utilisateur ayant un profil résidentiel Pr, occasionnel Po ou forfaitaire Pf, tant que le total des places assignées par profil ne dépasse pas le pourcentage prédéfini pour cette catégorie.

En variante, une aire 10 peut au contraire comporter des zones réservées pour chaque groupe de profil, de sorte que seuls les utilisateurs ayant un profil donné se voient assigner l'une des places de cette zone par l'unité de commande.

Dans tous les cas, un résidentiel Pr ne se voit pas attribuer systématiquement la même place par l'unité de commande.

Optionnellement, parmi chaque groupe de places attribuées par profil, seule une partie des places est assignée aux utilisateurs, de manière à tenir compte des éventuels endommagements des bornes 12, des moyens d'accrochage 11, des pannes, etc. Typiquement, 10% des places sont des places de renfort R (i.e. des places de réserve), et ne sont pas utilisées en fonctionnement normal.

Ainsi, lorsque l'unité de commande détecte que l'une des places de stationnement est indisponible, typiquement parce qu'elle est endommagée et ne fonctionne pas correctement, il lui est toujours possible d'assigner l'une des places normalement non utilisées.

Dans le cas où l'ensemble des places de renfort R sont utilisées, le système 1 peut modifier les zones réservées à chaque profil d'utilisateur.

Par exemple, si plus de 10% des places sont indisponibles, et que l'ensemble des places de renfort R sont déjà assignées, le système 1 réduit alors le nombre de places réservées par exemple aux occasionnels Po afin de maintenir le nombre de places réservées aux résidentiels Pr à son nombre initial.

En variante, lorsque l'ensemble des places de renfort ont déjà été assignées, le système 1 n'autorise l'accès de l'aire 10 de stationnement qu'à des utilisateurs ayant un profil donné, typiquement des résidentiels Pr, et lui assigne l'une des places indisponibles. L'utilisateur bénéficie alors d'une place dans l'aire 10, mais ne peut par exemple pas être détecté par les moyens de détection 11 si les moyens d'accrochage sont endommagés. Typiquement, l'utilisateur peut stationner son vélo 2 dans la place indisponible, mais ne peut verrouiller l'antivol sur la borne 12, ou n'est pas détecté par l'unité de commande 30 lorsqu'il verrouille l'antivol.

Au cours d'une deuxième étape, le système 1 vérifie s'il reste une place disponible pour l'utilisateur dans l'aire 10 de stationnement à l'entrée de laquelle il vient de s'identifier.

Si l'aire 10 de stationnement est complète, c'est-à-dire que toutes les places de stationnement pouvant être attribuées à l'utilisateur ont déjà été assignées (à l'exception éventuellement des places de renfort R), le système 1 indique à l'utilisateur, par exemple par le biais d'un écran d'affichage, que l'aire 10 et complète.

Optionnellement, le système 1 de stationnement consulte la disponibilité d'aires de stationnement proches, par exemple dans un rayon de deux kilomètres, et le cas échéant indique à l'utilisateur la (ou les) aire(s) de stationnement comportant encore des places libres. L'utilisateur peut en outre réserver, pendant un temps limité correspondant à la durée nécessaire pour se rendre à une autre aire de stationnement indiquée par le système 1, une place de stationnement.

En particulier, le système 1 considèrera que l'aire 10 de stationnement est complète si toutes les places de stationnement ont déjà été assignées, à l'exception éventuellement des places de renfort R, ou si aucune des places restantes ne peut être assignée à l'utilisateur qui vient de s'identifier.

En effet, comme nous avons pu le voir, le système 1 réserve un nombre de places déterminé à chaque type de profil d'utilisateurs, par exemple 50% des places pour les résidentiels Pr, 30% pour les forfaitaires Pf, et 20% pour les occasionnels Po.

Une fois que le nombre de places réservées pour un profil donné est atteint, le système 1 ne peut alors plus assigner de place de stationnement supplémentaire à un utilisateur de ce profil donné: le système 1 considère alors que l'aire 10 de stationnement est complète pour ce profil tant qu'un utilisateur de ce même profil ayant déjà stationné son vélo 2 ne libère pas de place, et réoriente le cas échant l'utilisateur vers une aire 10 de stationnement pouvant accueillir son vélo 2.

Selon une forme de réalisation préférée, le nombre de places réservées au sein de l'aire 10 pour le profil résidentiel Pr n'est pas limité. Par conséquent, tant que l'aire de stationnement 10 dispose de places de stationnement libres, le système 1 peut assigner une place à un utilisateur résidentiel Pr quel que soit le nombre de place déjà assignées à ce type de profil.

Par exemple, si l'aire 10 de stationnement est remplie à 20% par des vélos d'utilisateurs occasionnel Po, tandis que seules 5% des places sont occupées par des vélos d'utilisateurs forfaitaires Pf, le système 1 considère que l'aire 10 de stationnement est complète pour les occasionnels Po et les réoriente vers une aire 10 de stationnement ayant des places disponibles pour le profil occasionnel Po. En revanche, un utilisateur ayant un profil forfaitaire Pf ou résidentiel Pr peut encore stationner son vélo 2 dans cette aire 10 s'il reste des places libres, i.e. qui n'ont pas encore été assignées.

Avantageusement, si l'utilisateur est un résidentiel ou un forfaitaire, et que l'aire 10 complète correspond à l'aire identifiée dans leur contrat, leur stationnement dans une autre aire disponible sera facturé dans les mêmes conditions que s'il s'agissait de l'aire identifiée.

De la sorte, il devient possible de gérer de manière optimale l'occupation des aires de stationnement.

Dans une troisième étape, si le système 1 détermine qu'il reste au moins une place libre pour l'utilisateur, il lui assigne une place de stationnement dans l'aire 10.

Pour cela, le système 1 indique à l'utilisateur la place qu'il lui assigne, par exemple en affichant le numéro de la place sur l'écran 30 à l'entrée de l'aire 10.

Le système 1 permet alors l'ouverture de la porte de sécurité, par exemple en déverrouillant la porte, ou en l'ouvrant automatiquement par des moyens d'ouverture automatisés.

L'utilisateur peut alors pénétrer dans l'aire 10 de stationnement, et stationne son vélo 2 dans la place qui lui a été assignée par le système 1.

De préférence, l'utilisateur active les moyens de détection 11 individuels de la place de stationnement. En variante, la détection de la présence du vélo 2 a lieu sans intervention de l'utilisateur, par exemple par l'intermédiaire de capteurs de présence.

Lorsque les moyens de détection 11 sont du type câble antivol, l'utilisateur entoure le cadre et/ou la roue avant de son vélo 2 avec le câble puis insère l'extrémité libre du câble dans la borne 12 de stationnement correspondante, afin d'une part de verrouiller le vélo 2 sur la borne 12, et d'autre part de signaler à l'unité de commande 50 que le vélo 2 a bien été stationné sur la place qui lui avait été assignée.

Si l'utilisateur se trompe et stationne le vélo 2 dans une mauvaise place, l'unité de commande ne verrouille pas l'extrémité de l'antivol 11 de manière à signaler à l'utilisateur qu'il n'a pas stationné son vélo 2 dans la place qui lui a été assignée.

L'utilisateur dispose d'un temps prédéterminé pour stationner son vélo 2 sur la place qui lui a été assignée. Passé ce temps, si le système 1 ne détecte pas la présence du vélo 2 dans la place assignée à l'utilisateur, ni dans aucune autre place de stationnement, il en déduit que l'utilisateur n'a pas stationné son vélo 2, et que la place de stationnement est restée disponible pour un autre utilisateur. Il annule alors l'assignation de la place à l'utilisateur, qui doit alors sortir de l'aire 10 et recommencer la procédure afin qu'une autre place lui soit assignée.

## Revendications

1. Procédé de gestion d'un réseau de systèmes automatiques de stationnement (1) d'un véhicule comprenant :
- une aire (10) de stationnement comportant un nombre défini de places de stationnement ;
- des moyens d'identification (20) d'un utilisateur ;
- une unité de commande (50) comportant des moyens d'assignation d'une place de stationnement (12) libre à l'utilisateur ; et
- des moyens de verrouillage (11) du véhicule sur la place de stationnement assignée par l'unité de commande (50),
ledit procédé comprenant les étapes suivantes :
- identifier un utilisateur ;
- déterminer si une place de stationnement est déjà assignée à l'utilisateur dans le réseau ; et
- actionner les moyens de verrouillage (11) du véhicule.

2. Procédé de gestion selon la revendication précédente, dans lequel l'unité de commande (50) n'actionne que les moyens de verrouillage (11) associés à la place assignée à l'utilisateur.

3. Procédé de gestion selon l'une des revendications précédentes, dans lequel lorsqu'une place de stationnement est déjà assignée à l'utilisateur, l'unité de commande (50) déverrouille automatiquement les moyens de verrouillage (11) de la place de stationnement qui est assignée à l'utilisateur.

4. Procédé de gestion selon la revendication précédente, dans lequel l'unité de commande (50) ne déverrouille que les moyens de verrouillage (11) de la place de stationnement qui est assignée à l'utilisateur.

5. Procédé de gestion selon l'une des revendications 1 ou 2, dans lequel lorsqu'aucune place de stationnement n'est encore assignée à l'utilisateur, l'unité de commande (50) assigne une place de stationnement à l'utilisateur et autorise le verrouillage des moyens de verrouillage (11) de cette place de stationnement.

6. Borne (12) de stationnement d'un véhicule du type vélo, notamment pour une aire de stationnement comportant une pluralité de places de stationnement, ladite borne comprenant des moyens de verrouillage (11) du véhicule et étant contrôlée par une unité commande (50), **caractérisée en ce que** les moyens de verrouillage (11) sont actionnables par l'unité de commande.

7. Borne (12) de stationnement selon la revendication précédente, **caractérisée en ce que** les moyens de verrouillage (11) sont un câble antivol, dont une extrémité est fixée sur la borne (12).

8. Borne (12) de stationnement selon la revendication précédente, **caractérisée en ce que** l'autre extrémité du câble est pourvue d'un embout (11a) complémentaire d'un logement (11b) prévu sur la borne (12).

9. Borne (12) de stationnement **caractérisée en ce qu'**elle fait partie d'un système automatique de stationnement géré par un procédé selon l'une des revendications 1 à 5.
